Europäisches Patentamt

European Patent Office

Office européen des brevets

(19)

(11) Publication number: 0 349 002

A1

(12) EUROPEAN PATENT APPLICATION

(21) Application number: 89111962.0

(51) Int. Cl.⁴: B63B 15/00 , B23P 13/00

(22) Date of filing: 30.06.89

(30) Priority: 30.06.88 ZA 884691
01.11.88 ZA 888176

(43) Date of publication of application:
03.01.90 Bulletin 90/01

(84) Designated Contracting States:
AT BE CH DE ES FR GB GR IT LI LU NL SE

(71) Applicant: Goulooze, Marinus
Industrie Road
Mossel Bay Cape Province(ZA)

(72) Inventor: Goulooze, Marinus
Industrie Road
Mossel Bay Cape Province(ZA)

(74) Representative: Füchsle, Klaus, Dipl.-Ing. et al
Hoffmann . Eitle & Partner Patentanwälte
Arabellastrasse 4
D-8000 München 81(DE)

(54) Tubular structure and method of making a tapered tubular structure.

(57) A tapered tubular structure is made from extruded stock. The extruded stock comprises a first curved portion 12 having a free longitudinal edge, a second curved portion 14 having a free longitudinal edge, and a flat web portion 16 joining the first and second curved portions. There is a rabbet 20.1, 20.2 along each of the free longitudinal edges. The stock is cut, in the region of the web portion, along a line 22 which extends at an angle to the longitudinal direction of the stock. The two sections 24.1, 24.2 thus formed are then inverted with respect to one another and secured together with the cut edge of the one section fitting in the rabbet of the other section. The sections are secured together by riveting, thereby forming a re-connected profile. In one embodiment two re-connected profiles are assembled to form a complete tube. In another embodiment a single re-connected tube forms a complete tube. A bolt rope track 18 may be formed in one of the curved portions.

FIG.2

## Tubular structure and method of making a tapered tubular structure.

THIS INVENTION relates to tubular structures. More particularly, it relates to a tapered tubular structure, to an extruded profile for use in making such a tubular structure, and to a method of making a tapered tubular structure.

The invention finds particular application in the construction of masts for sailing vessels. Extruded aluminium masts have become very popular. They consist either of an extruded aluminium tube or of a tube assembled from extruded aluminium sections. Because it is not possible to extrude a tapered profile, these masts are, essentially, parallel-sided. In other words, they have a constant cross-section throughout their length. It is known to form the head portion of such a mast with a taper by cutting a V-shaped slot in the forward side of the tube, closing the gap thus formed by bending the aluminium material, and then welding the opposed (and now abutting) edges together. This is an expensive operation. Also, welding alters the physical properties of the extruded aluminium, thereby weakening the structure. As a result, only a small portion at the head of the mast can effectively be tapered in this manner.

A tapered mast has many advantages over a parallel-sided mast. Some of these stem from the fact that the mass distribution in a tapered mast is lower down than in a parallel-sided mast, leading to a lower centre of gyration. Other advantages stem from the fact that the smaller the cross-section of the mast, the better is the aerodynamic performance of the mast and sail combination. This improvement in performance becomes more prominent towards the head of the mast because of the relatively small sail area at the head of the sail as compared to the sail area at the foot of the sail. With a parallel-sided mast, the heat portion of the mast and sail combination is, aerodynamically, almost entirely ineffective. Yet another advantage of a tapered mast is that artificial bending of the mast which is required for proper sail setting does not stress the mast as much as would be the case with a parallel-sided mast.

It is an object of the present invention to produce, from extruded stock, a tapered mast and other tapered tubular structures for use in a sailing vessel.

According to the invention there is provided a tubular structure which includes first and second sections of extruded material; the first section having, in cross-section, a flat web portion and a first curved portion joined to the web portion, one longitudinal edge of the first section having been formed by cutting extruded stock in the region of the web portion at an angle to the longitudinal direction of the extruded stock; the second section having, in cross-section, a second curved portion and a rabbet formed by extrusion along one longitudinal edge of the second section; and the first and second sections being secured together with said one longitudinal edge of the first section fitting in the rabbet of the second section.

The first section may, along the other longitudinal edge thereof, have a rabbet formed by extrusion; and the second section may, in cross-section, have a flat web portion joined to the second curved portion, the other longitudinal edge of the second portion having been formed by cutting extruded stock in the region of the web portion at an angle to the longitudinal direction of the extruded stock.

Where the tubular structure is for use as a mast in a sailing vessel, the first section may have a bolt rope track formed therein, in the region of the first curved portion.

Further according to the invention there is provided an extruded profile for use in making a tapered tubular structure, the profile comprising a first curved portion having a free longitudinal edge, a second curved portion having a free longitudinal edge, and a flat web portion joining the first and second curved portions, there being a first rabbet along the free longitudinal edge of the first curved portion and a second rabbet along the free edge of the second curved portion.

The first curved portion may be formed with a bolt rope track.

The face of the first rabbet and the web portion may subtend between them a first angle of greater than $0°$ and less than $90°$, and the face of the second rabbet and the web portion may subtend between them a second angle of greater than $90°$ and less than $180°$, the sum of the first and second angles being equal to $180°$.

In an alternative construction the face of the first rabbet may be co-planar with the face of the second rabbet, the faces of the first and second rabbets being parallel to the web portion.

The invention extends to a method of making a tapered tubular structure, which method includes the steps of cutting an extruded profile as hereinbefore defined, in the region of the web portion, along a straight line which extends at an angle to the longitudinal direction of the profile, thereby to separate the profile into two sections each of which has a longitudinally extending cut edge; inverting the sections with respect to one another; and securing the sections together with the cut edge of one of the sections being fitted in the rabbet of the other section.

The invention will now be described in more detail, by way of example, with reference to the accompanying drawings.

In the drawings :

Figure 1 is an end view of a profile used in the construction of a yacht mast in accordance with the invention;

Figure 2 is a diagrammatic perspective view of the profile, showing how it is cut;

Figure 3 is a diagrammatic perspective view of the two parts formed by the cut, after the one has been turned upside down, and the two parts re-connected;

Figure 4 is a view from above of two of the re-connected profiles of Figure 3;

Figure 5 is a cross-section through the two re-connected profiles, after they have been assembled to form a mast;

Figure 6 is a perspective end view of a profile used in the construction of a spreader for a yacht mast;

Figure 7 is a plan view of the finished spreader;

Figure 8 is a cross-section of the spreader, on line VIII-VIII in Figure 7; and

Figure 9 is a cross-section of the spreader, on line IX-IX in Figure 7.

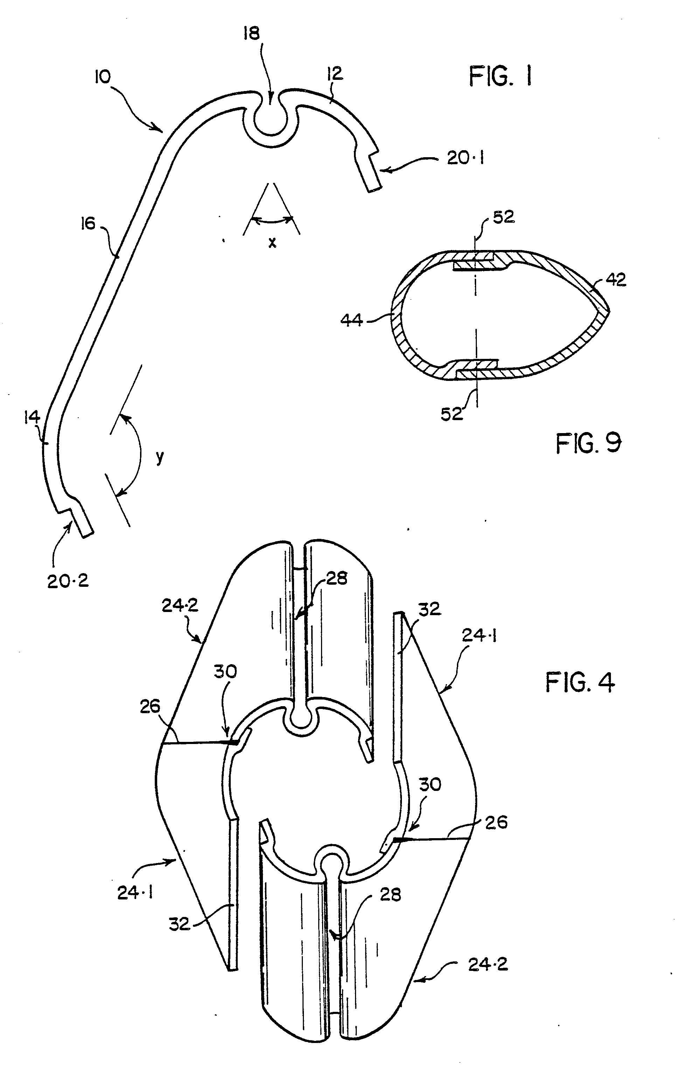

The profile generally designated 10 in Figure 1 is an aluminium extrusion and is therefore of constant cross section throughout its length. It comprises a first curved portion 12, a second curved portion 14, and a flat web portion 16 joining the two curved portions.

The curved portion 12 is shaped to form a bolt rope track 18. At the free edge of the curved portion 12 there is a rabbet 20.1 and at the free edge of the curved portion 14 there is a rabbet 20.2. The depth of the rabbets 20.1, 20.2 is equal to the thickness of the web 16.

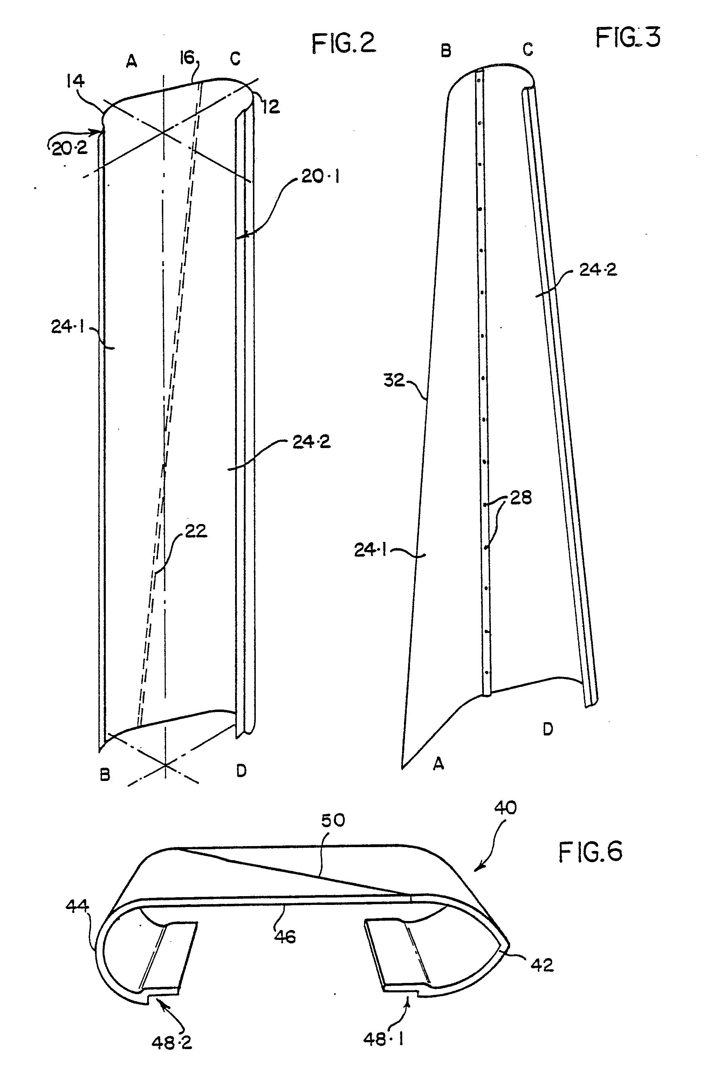

Two of the profiles 10 are used to construct a yacht mast, as will now be described with reference to Figures 2 to 5.

The profile 10 is cut along a straight line 22 (Figure 2). The cut 22 extends at a small angle to the longitudinal direction of the profile, from a point on the web 16 near the curved portion 12 at the top end of the profile, to a point on the web 16 near the curved portion 14 at the bottom end of the profile. The cut 22 separates the profile into two sections, namely a first section 24.1 and a second section 24.2. The section 24.1 has a wide end A and a narrow end B, whereas the section 24.2 has a narrow end C and a wide end D.

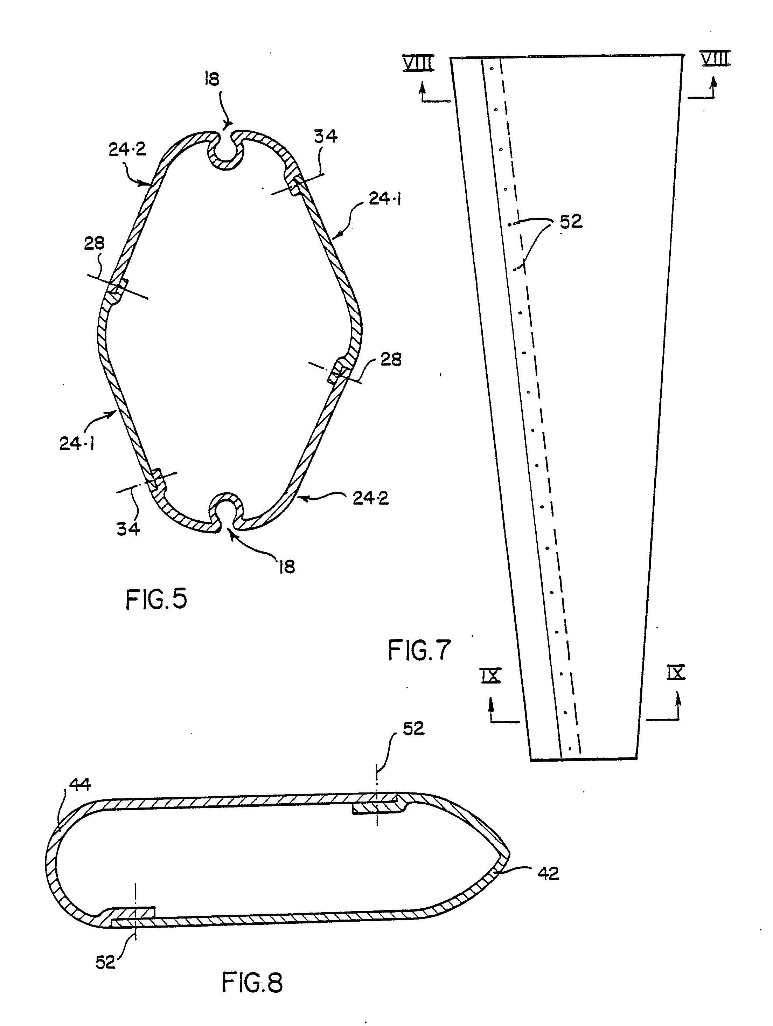

The section 24.1 is now turned upside down, so that the narrow end B thereof is adjacent the narrow end C of the section 24.2, and so that the wide end A thereof is adjacent the wide end D of the section 24.2. The plain edge 26 of the section 24.2, adjacent where the profile was cut, fits in the rabbet 20.2 of the section 24.1 (see Figure 5). The section 24.1 and 24.2 are now drilled at 28 (Figure 5), at spaced positions along the length of the sections, and then secured together by means of blind rivets (also referred to as "pop rivers") which pass through the drilled holes. The rivets are not shown. This results in a re-connected profile which is narrow at one end and wide at the other end. Near the narrow end which, in a mast, is an area of low stress, the sections may be secured together by welding as indicated at 30 in Figure 4. Two of such re-connected profiles are made, as shown in Figure 4, and these are then secured together as illustrated in Figure 5. Thus, a plain edge portion 32 of the one re-connected profile will fit in the rabbet 20.1 of the other re-connected profile and secured together by blind rivets which pass through the parts at the positions indicated by centre line 34.

The face of the rabbet 20.1 and the web portion 16 subtend between them an angle x which is greater than $0°$ and less than $90°$, whereas the face of the rabbet 20.2 and the web portion 16 subtend between them an angle y which is greater than $90°$ and less than $180°$. The sum of the angles x and y is $180°$. In other words, the faces of the rabbets 20.1 and 20.2 are parallel to one another.

The construction described above results in a mast which has a relatively large cross section (and thus high moment of inertia) at the bottom, and tapers down to the top where it has a relatively small cross section (and, as a result, a relatively low moment of inertia). The mast further has a bolt rope track 18 fore and aft. The aft track will be used in the conventional manner for a bolt rope, whereas the fore track may be used as a conduit for electrical wiring and the like leading to the top of the mast. After insertion of the wiring, the track may be closed by means of a strip of adhesive tape or the like.

Referring now to Figures 6 to 9, reference numeral 40 designates a profile, again in the form of an aluminium extrusion, which is suitable for the construction of a tapered spreader for a yacht mast. The profile 40 has a first curved portion 42, a second curved portion 44, and a flat web portion 46 joining the two curved portions. At the free edge of the curved portion 42 there is a rabbet 48.1 and at the free edge of the curved portion 44 there is a rabbet 48.2. The face of the rabbet 48.1 is coplanar with the face of the rabbet 48.2, and these faces are parallel to the web portion 46.

To make a tapered spreader from the profile 40, the profile is cut along a straight line 50 which extends at a small angle to the longitudinal direction of the profile, one of the two sections thus formed is inverted, and the two sections then drilled and secured together by means of blind rivets at 52'. As will be seen in Figures 8 and 9, the profile 40 is designed such that the resultant spreader has a streamlined, teardrop shape in cross-section. Whereas two profiles (i.e. four sections) are required to form the tubular structure illustrated in Figures 1 to 5, only one profile (i.e. two sections) are required to form the tubular structure of Figures 6 to 9.

Reference signs in the claims are intended for better understanding and shall not limit the scope.

## Claims

1. A tubular structure which includes first and second sections (24.1, 24.2) of extruded material, characterised in that: the first section (24.1) has, in cross-section, a flat web portion (16, 46) and a first curved portion (12, 42) joined to the web portion, one longitudinal edge (26) of the first section having been formed by cutting extruded stock in the region of the web portion at an angle to the longitudinal direction of the extruded stock; the second section (24.2) has, in cross-section, a second curved portion (14, 44) and a rabbet (20.2, 48.2) formed by extrusion along one longitudinal edge of the second section; and the first and second sections (24.2, 24.2) being secured together with said one longitudinal edge (26) of the first section fitting in the rabbet (20.2) of the second section.

2. A tubular structure as claimed in claim 1, characterised in that the first section (24.1) has, along the other longitudinal edge thereof, a rabbet (20.1, 48.1) formed by extrusion; and wherein the second section (24.2) has, in cross-section, a flat web portion (16, 46) joined to the second curved portion (14, 44), the other longitudinal edge of the second portion having been formed by cutting extruded stock in the region of the web portion at an angle to the longitudinal direction of the extruded stock.

3. A tubular structure as claimed in claim 1 or claim 2, for use as a mast in a sailing vessel, characterised in that the first section (24.1) has a bolt rope track (18) formed therein, in the region of the first curved portion (12).

4. An extruded profile (10, 40) for use in making a tapered tubular structure, characterised in that the profile comprises a first curved portion (12, 42) having a free longitudinal edge, a second curved portion (14, 44) having a free longitudinal edge, and a flat web portion (16, 46) joining the first and second curved portions, there being a first rabbet (20.1, 48.1) along the free longitudinal edge of the first curved portion (12, 42) and a second rabbet (20.2, 48.2) along the free edge of the second curved portion (14, 44).

5. An extruded profile as claimed in claim 4, characterised in that the first curved portion (12) is formed with a bolt rope track (18).

6. An extruded profile as claimed in claim 4 or claim 5, characterised in that the face of the first rabbet (20.1) and the web portion (16) subtend between them a first angle $(x)$ of greater than $0°$ and less than $90°$, and wherein the face of the second rabbet (20.2) and the web portion (16) subtend between them a second angle $(y)$ of greater than $90°$ and less than $180°$, the sum of the first and second angles being equal to $180°$.

7. An extruded profile as claimed in claim 4 or claim 5, characterised in that the face of the first rabbet (48.1) is co-planar with the face of the second rabbet (48.2), and that the faces of the first and second rabbets are parallel to the web portion (16).

8. A method of making a tapered tubular structure, characterised in that it includes the steps of cutting an extruded profile as claimed in any one of claims 6 to 9, in the region of the web portion (16, 56), along a straight line (22, 50) which extends at an angle to the longitudinal direction of the profile, thereby to separate the profile into two sections (24.1, 24.2) each of which has a longitudinally extending cut edge (26, 32); inverting the sections with respect to one another; and securing the sections together with the cut edge (26) of one of the sections being fitted in the rabbet (20.2) of the other section.

FIG. 1

FIG. 9

FIG. 4

FIG.2

A    16    C

14

20·2

12

20·1

24·1

24·2

22

B    D

FIG.3

B    C

24·2

32

24·1    28

A    D

50    40

FIG.6

44

46    42

48·2    48·1

FIG.5

FIG.7

FIG.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | WO-A-8 705 962 (ABRAHAM et al.)<br>* Page 3, lines 21-37; figure 1 *<br>--- | 1 | B 63 B 15/00<br>B 23 P 13/00 |
| A | FR-A-2 194 180 (SOCIETE BARBIER)<br>* Page 2, lines 31-35; page 3; figures *<br>--- | 1,4 | |
| A | FR-A-2 353 348 (LAMBOLEY)<br>* Page 10; figures *<br>--- | 1 | |
| A | GB-A- 937 202 (TEBBIT RAVEN)<br>* Page 2; figures 1,3,6 *<br>----- | 1,2 | |

TECHNICAL FIELDS
SEARCHED (Int. Cl.4)

B 63 B
B 21 C
B 23 P

The present search report has been drawn up for all claims

| Place of search | Date of completion of the search | Examiner |
|---|---|---|
| THE HAGUE | 07-10-1989 | VISENTIN, M. |

EPO FORM 1503 03.82 (P0401)